# FASCICULE DE BREVET EUROPEEN

(11) **EP 3 707 016 B1**
(45) Date de publication et mention de la délivrance du brevet: **14.07.2021**
(21) Numéro de dépôt: 18808445.3
(22) Date de dépôt: 05.11.2018
(51) Int. Cl.: B60C 3/04, B60C 9/02, B60C 9/18, B60C 13/00, B60C 15/02, B60C 15/024, B60C 19/00

(54) **PNEUMATIQUE POUR VEHICULE DE TOURISME**
REIFEN FÜR PERSONENKRAFTWAGEN
TYRE FOR PASSENGER VEHICLE

(30) Priorité: 07.11.2017 FR 1760434
(43) Date de publication de la demande: 16.09.2020
(73) Titulaire: Compagnie Générale des Etablissements Michelin, 63000 Clermont-Ferrand (FR)
(72) Inventeur: MORIVAL, Sylvain, 63040 CLERMONT-FERRAND Cedex 9 (FR)
(74) Mandataire: Desbordes, Guillaume
(86) Numéro de dépôt international: PCT/FR2018/052711
(87) Numéro de publication internationale: WO 2019/092343

(56) Documents cités:
- FR-A1- 2 971 733
- US-A- 3 010 504
- US-A- 5 568 830

## Description

L'invention a pour objet un pneumatique pour véhicule de tourisme.

Le domaine de pneumatique plus précisément étudié est celui des pneumatiques de tourisme dont la section méridienne est caractérisée par une largeur de section S et une hauteur de section H, au sens de la norme de la European Tyre and Rim Technical Organisation ou « ETRTO », telles que le rapport H/S, exprimé en pourcentage, est au plus égal 65, et la largeur de section S est au moins égale à 195 mm. En outre le diamètre au seat D, définissant le diamètre de la jante de montage du pneumatique, est au moins égal à 15 pouces, et généralement au plus égal à 21 pouces.

Dans ce qui suit, et par convention, les directions circonférentielle XX', axiale YY' et radiale ZZ' désignent respectivement une direction tangente à la surface de roulement du pneumatique selon le sens de rotation du pneumatique, une direction parallèle à l'axe de rotation du pneumatique et une direction perpendiculaire à l'axe de rotation du pneumatique. Par «radialement intérieur », respectivement « radialement extérieur», on entend «plus proche de l'axe de rotation du pneumatique », respectivement « plus éloigné de l'axe de rotation du pneumatique». Par «axialement intérieur », respectivement « axialement extérieur», on entend «plus proche du plan équatorial du pneumatique», respectivement « plus éloigné du plan équatorial du pneumatique», le plan équatorial XZ du pneumatique étant le plan passant par le milieu de la surface de roulement du pneumatique et perpendiculaire à l'axe de rotation du pneumatique.

De façon générale, un pneumatique comprend un sommet ayant deux extrémités axiales prolongées chacune, radialement vers l'intérieur, par un flanc puis par un bourrelet destiné à entrer en contact avec une jante, l'ensemble délimitant une cavité torique intérieure. Plus précisément le sommet comprend, radialement de l'extérieur vers l'intérieur, une bande de roulement, destinée à entrer en contact avec le sol par l'intermédiaire d'une surface de roulement, une armature de sommet et une portion d'armature de carcasse destinées à assurer le renforcement du pneumatique. L'armature de carcasse relie les deux flancs entre eux en s'étendant dans une portion radialement intérieure du sommet et est ancrée, dans chaque bourrelet, à un élément circonférentiel de renforcement, le plus souvent de type tringle.

Les normes relatives au pneumatique, telles que, par exemple, celles de l'ETRTO, définissent des conditions d'usage nominales pour un pneumatique de dimension donnée, caractérisée par une largeur de section S, une hauteur de section H et un diamètre au seat D. Ainsi un pneumatique de dimension donnée est destiné à être monté sur une jante nominale, à être gonflé à une pression nominale P et à être soumis à une charge nominale Z. La charge appliquée sur le pneumatique est ainsi reprise par le pneumatique, grâce à sa rigidité pneumatique, résultant de la pression de gonflage, et grâce à sa rigidité structurelle intrinsèque.

Un pneumatique doit satisfaire un ensemble de performances, telles que, à titre d'exemple et de façon non exhaustive, le comportement, la résistance au roulement, l'adhérence, l'usure et le bruit, ce qui implique parfois des choix de conception antinomiques. Il est ainsi fréquent que des choix de conception pour l'amélioration d'une performance donnée entrainent la dégradation d'une autre performance. C'est le cas, par exemple, pour la recherche d'un compromis satisfaisant entre le comportement et la résistance au roulement.

Il est connu que le comportement d'un pneumatique, qui caractérise son aptitude à supporter les diverses sollicitations mécaniques auxquelles il est soumis en roulage, telles que les sollicitations en dérive et/ou les sollicitations transversales, dépend de ses rigidités mécaniques respectivement de dérive Dz et transversale K_{YY}. Le comportement du pneumatique est d'autant meilleur que ces rigidités mécaniques sont élevées.

Dans l'état de la technique, pour améliorer le comportement du pneumatique, l'homme du métier a conçu, par exemple, des bourrelets de pneumatique à forte rigidité, c'est-à-dire ayant un volume important, résultant d'une épaisseur axiale et/ou d'une hauteur radiale élevées, et comprenant des matériaux élastomériques ayant un module d'élasticité et une hystérèse élevés, c'est-à-dire des matériaux à la fois rigides et dissipatifs. Une telle conception a, en contrepartie, augmenté la valeur de la résistance au roulement, donc dégradé la performance en résistance au roulement, et, corrélativement, augmenté la consommation de carburant.

Dans le document WO2017005713, une solution alternative au pneumatique classique a été proposée à travers un dispositif de type pneumatique comprenant deux structures de révolution respectivement radialement extérieure et radialement intérieure, une structure porteuse constituée par des éléments porteurs identiques, en extension en dehors de l'aire de contact avec le sol et en compression dans l'aire de contact, et deux flancs. Les éléments porteurs sont filaires et sont reliés respectivement à la face radialement intérieure de la structure de révolution radialement extérieure par un tissu radialement extérieur et à la face radialement extérieure de la structure de révolution radialement intérieure par un tissu radialement intérieur. En outre, la densité surfacique moyenne D des éléments porteurs par unité de surface de structure de révolution radialement extérieure, exprimée en 1/m², est au moins égale à (S/S_{E})^{∗}Z/(A^{∗}Fᵣ), où S est la surface, en m², de la face radialement intérieure de la structure de révolution radialement extérieure, S_{E} est la surface de liaison, en m², du tissu radialement extérieur avec la face radialement intérieure de la structure de révolution radialement extérieure, Z est la charge radiale nominale, en N, A est la surface de contact au sol, en m², et Fᵣ la force à rupture, en N, d'un élément porteur. Cette solution permet de supprimer les bourrelets dissipatifs d'un pneumatique classique, donc de réduire la résistance au roulement de façon drastique, tout en garantissant un bon comportement grâce à la reprise des sollicitations mécaniques de dérive et transversales par les éléments filaires de la structure porteuse. Toutefois, ce dispositif pneumatique présente en particulier l'inconvénient de nécessiter l'utilisation d'une jante non standard.

Des dispositifs pneumatiques sont également connus des documents FR2971733, US3010504 et US5568830.

Les inventeurs se sont donnés pour objectif de concevoir un pneumatique pour véhicule de tourisme, apte à être monté sur une jante standard, avec une résistance au roulement diminuée et le même niveau de comportement, par rapport à un pneumatique classique de l'état de la technique.

Ce but a été atteint par un pneumatique pour véhicule de tourisme ayant une largeur axiale S, destiné à être gonflé à une pression nominale et à être soumis à une charge nominale, comprenant :
- un sommet ayant deux extrémités axiales prolongées chacune, radialement vers l'intérieur, par un flanc puis par un bourrelet destiné à entrer en contact avec une jante, l'ensemble constitué par le sommet, les deux flancs et les deux bourrelets délimitant une cavité torique intérieure,
- une armature de carcasse, reliant les deux flancs entre eux en s'étendant dans une portion radialement intérieure du sommet et étant ancrée, dans chaque bourrelet, à un élément circonférentiel de renforcement,
- au moins un bourrelet étant prolongé axialement vers l'intérieur par une semelle flexible en porte à faux comprenant une extrémité libre,
- la semelle flexible comprenant une portion d'ancrage au bourrelet et une portion courante rigide, s'étendant axialement vers l'intérieur à partir de la portion d'ancrage jusqu'à l'extrémité libre,
- le pneumatique comprenant une structure porteuse, destinée à reprendre au moins en partie la charge nominale appliquée au pneumatique monté sur sa jante et gonflé à sa pression nominale,
- et la structure porteuse étant constituée par des éléments porteurs, deux à deux indépendants, s'étendant continûment dans la cavité torique intérieure, à partir d'une interface radialement intérieure du sommet jusqu'à la semelle flexible, de telle sorte que, lorsque le pneumatique est soumis à une charge nominale, les éléments porteurs, reliés à une portion de pneumatique en contact avec le sol, sont soumis à un flambage en compression et au moins une partie des éléments porteurs, reliés à la portion de pneumatique non en contact avec le sol, sont en tension.

Le principe de l'invention est d'implanter, dans un pneumatique radial classique, une structure porteuse participant au moins partiellement au port de la charge appliquée au pneumatique, de telle sorte que cette charge appliquée est reprise conjointement par le pneumatique, grâce à sa rigidité pneumatique et à sa rigidité structurelle, et par la structure porteuse, grâce à la rigidité de ses éléments porteurs constitutifs. Par participation au moins partielle de la structure porteuse au port de la charge appliquée, on entend une participation au port de charge, à titre indicatif, au moins égale à 5% et au plus égale à 70% de la charge appliquée. La répartition du port de la charge appliquée entre le pneumatique et la structure porteuse dépend de leurs rigidités respectives.

La présence d'une structure porteuse permet ainsi de diminuer la contribution du pneumatique au port de la charge et donc de diminuer sa rigidité structurelle, par exemple en réduisant le volume des bourrelets, voire en les supprimant. En effet, les bourrelets d'un pneumatique classique dissipent une quantité d'énergie significative, du fait de leur volume et du caractère hystérétique de leur mélange élastomérique constitutif. Réduire leur volume, voire les supprimer, permet ainsi de réduire de façon significative la résistance au roulement.

En outre, la structure porteuse limite la déformation du sommet, lors du roulage, ainsi que la contre-flèche, c'est-à-dire la déformation radiale, à l'opposé de l'aire de contact. Ainsi, au cours du roulage du pneumatique, au tour de roue, la structure porteuse permet de limiter l'amplitude des déformations cycliques du pneumatique, et en particulier de sa bande de roulement, et donc de limiter la dissipation d'énergie résultante, ce qui contribue à la diminution de la résistance au roulement.

Concernant le comportement mécanique du pneumatique sous sollicitations transversales, par exemple lors d'un roulage en dérive, la structure porteuse va contribuer à augmenter la rigidité transversale ou axiale du pneumatique, et donc à améliorer ce comportement. Cette contribution à la rigidité transversale du pneumatique est le plus souvent obtenue par l'inclinaison des éléments porteurs par rapport à une direction radiale du pneumatique.

Sur un plan structurel, selon l'invention, la structure porteuse est constituée par des éléments porteurs, deux à deux indépendants, s'étendant dans la cavité torique intérieure, à partir d'une interface radialement intérieure du sommet jusqu'à la semelle flexible, de telle sorte que, lorsque le pneumatique est soumis à une charge radiale nominale, les éléments porteurs, reliés à une portion de pneumatique en contact avec le sol, sont soumis à un flambage en compression et au moins une partie des éléments porteurs, reliés à la portion de pneumatique non en contact avec le sol, sont en tension.

Le principe de fonctionnement d'une telle structure porteuse est de porter au moins en partie la charge appliquée au pneumatique par la mise en tension d'une partie des éléments porteurs positionnés en dehors de l'aire de contact avec le sol, les éléments porteurs positionnés dans l'aire de contact avec le sol étant soumis à un flambage en compression et ne participant donc pas au port de la charge appliquée.

Les éléments porteurs sont deux à deux indépendants, c'est-à-dire non liés mécaniquement entre eux dans la cavité torique intérieure du pneumatique, de telle sorte qu'ils ont des comportements mécaniques indépendants. Par exemple, ils ne sont pas liés entre eux de façon à former un réseau ou un treillis.

Chaque élément porteur s'étend continûment dans la cavité torique intérieure, à partir d'une interface radialement intérieure du sommet jusqu'à la semelle flexible, c'est-à-dire selon une trajectoire comprenant une première extrémité reliée à une interface radialement intérieure du sommet et une deuxième extrémité reliée à la semelle flexible.

Généralement, les éléments porteurs de la structure porteuse sont identiques, c'est-à-dire qu'ils ont des caractéristiques géométriques et des matériaux constitutifs identiques.

En ce qui concerne les interfaces de la structure porteuse avec le pneumatique, c'est-à-dire son accrochage au pneumatique, la structure porteuse est reliée radialement à l'extérieur à une interface radialement intérieure du sommet et radialement à l'intérieur à une semelle flexible prolongeant, axialement vers l'intérieur, un bourrelet de pneumatique. En d'autres termes, la structure porteuse est accrochée radialement à l'extérieur à une interface radialement intérieure du sommet, pouvant être, à titre d'exemple et de façon non exhaustive, un élément comprenant un mélange élastomérique, solidarisé à la paroi de la cavité torique intérieure, à l'aplomb du sommet du pneumatique, et la structure porteuse est accrochée radialement à l'intérieur à une semelle flexible en porte à faux prolongeant axialement vers l'intérieur un bourrelet de pneumatique, c'est-à-dire une semelle dont les points peuvent se déplacer selon une direction radiale.

Une semelle flexible n'est pas nécessairement déformable en flexion et peut être plus ou moins rigide. Une semelle flexible rigide est une semelle rigide dont l'interface axialement extérieure, correspondant à sa portion d'ancrage au bourrelet, est souple, ce qui autorise un déplacement radial des points de la semelle sans déformation en flexion de celle-ci.

L'intérêt d'avoir une semelle flexible est de garantir une souplesse de la structure porteuse au niveau d'au moins un de ses accrochages, permettant ainsi un amortissement des vibrations mécaniques transmises par les éléments porteurs, lors du roulage du pneumatique, entre le sol et le véhicule et susceptibles de générer un bruit à l'intérieur du véhicule gênant pour le conducteur du véhicule.

Préférentiellement, chaque bourrelet est prolongé axialement vers l'intérieur par une semelle flexible. La présence d'une semelle flexible, ancrée à chaque bourrelet, permet de limiter la largeur axiale de chaque semelle flexible, mesurée entre son extrémité d'ancrage au bourrelet et son extrémité libre, et donc de limiter les déplacements radiaux de ses points. Le plus souvent, l'extrémité libre de chaque semelle flexible est axialement extérieure à un plan équatorial équidistant des extrémités axiales du sommet, partageant le pneumatique en deux moitiés symétriques. De plus, la présence d'une semelle flexible par bourrelet permet de répartir l'accrochage radialement intérieur de la structure porteuse entre les deux bourrelets et donc de répartir les efforts passant par la structure porteuse entre les deux moitiés du pneumatique.

Encore préférentiellement, les semelles flexibles sont symétriques par rapport à un plan équatorial équidistant des extrémités axiales du sommet. Cette variante du mode de réalisation préféré à deux semelles permet de répartir symétriquement l'accrochage radialement intérieur de la structure porteuse entre les deux bourrelets et de répartir les efforts passant par la structure porteuse entre les deux moitiés du pneumatique.

Selon une variante préférée du mode de réalisation préféré, les semelles flexibles symétriques sont structurellement identiques. Cette variante préférée du mode préféré de réalisation à deux semelles symétriques permet non seulement de répartir symétriquement l'accrochage radialement intérieur de la structure porteuse entre les deux bourrelets, mais aussi de répartir symétriquement les efforts passant par la structure porteuse entre les deux moitiés du pneumatique. Elle garantit un comportement symétrique du pneumatique, en particulier lors d'un roulage en dérive. Enfin, deux structures identiques contribuent à la simplification de la fabrication.

Chaque semelle flexible a une largeur axiale W1 avantageusement au moins égale à 0.05 fois la largeur axiale S du pneumatique. La largeur axiale W1 de la semelle flexible est la distance axiale mesurée entre le point, le plus axialement extérieur de la semelle flexible et en contact avec le bourrelet, et l'extrémité libre axialement intérieure de la semelle flexible. La largeur axiale S du pneumatique est la largeur axiale théorique définie par la norme ETRTO, figurant dans l'appellation dimensionnelle du pneumatique. En deçà de cette valeur minimale, la largeur axiale W1 de la semelle flexible est insuffisante pour pouvoir permettre l'accrochage de la structure porteuse à la semelle flexible.

Encore avantageusement, chaque semelle flexible a une largeur axiale W1 au plus égale à 0.4 fois la largeur axiale S du pneumatique. Une largeur axiale W1 de la semelle flexible, au-delà de cette valeur maximale, complexifie le montage du pneumatique sur sa jante, du fait de l'encombrement de la semelle flexible.

Selon un mode de réalisation particulier, la portion d'ancrage de chaque semelle flexible a une rigidité K1 au plus égale à la rigidité K2 de la portion courante de la semelle flexible. En d'autres termes, la portion d'ancrage est assouplie par rapport à la portion courante rigide. L'ajustement de la rigidité K1 de la portion d'ancrage permet d'autoriser de plus ou moins grands déplacements radiaux de la portion courante rigide, et, par conséquent, de régler la rigidité globale de la semelle flexible, en particulier vis-à-vis de l'amortissement recherché pour les vibrations mécaniques transmises par les éléments porteurs, et donc du niveau de bruit de cavité admissible.

Dans le cas d'une portion d'ancrage souple, ayant une rigidité K1 au plus égale à la rigidité K2 de la portion courante, la portion d'ancrage de chaque semelle flexible a une largeur axiale W3 au plus égale à 0.85 fois la largeur axiale W1 de la semelle flexible. La largeur axiale W3 de la portion d'ancrage est la distance axiale mesurée entre le point, le plus axialement extérieur de la semelle flexible et en contact avec le bourrelet, et l'extrémité axialement extérieure de la portion courante de la semelle flexible.

Avantageusement l'interface radialement intérieure du sommet à laquelle est reliée la structure porteuse comprend deux portions disjointes. Dans le cas le plus fréquent de deux semelles flexibles, la structure porteuse est alors constituée de deux ensembles d'éléments porteurs, chacun d'entre eux étant respectivement relié radialement à l'intérieur à une semelle flexible et radialement à l'extérieur à une portion d'interface radialement intérieure du sommet. Généralement, les deux portions d'interface radialement intérieure du sommet sont axialement positionnées de part et d'autre du plan équatorial du pneumatique. Cette séparation permet d'ajuster la position géométrique de la structure porteuse, et plus précisément l'inclinaison des éléments porteurs par rapport à une direction radiale, et par conséquent la tension de ces éléments porteurs.

Dans le cas de deux portions d'interface radialement intérieure du sommet disjointes, les deux portions disjointes de l'interface radialement intérieure du sommet sont préférentiellement symétriques par rapport à un plan équatorial équidistant des extrémités axiales du sommet. Cette conception permet de répartir symétriquement l'accrochage radialement extérieur de la structure porteuse, et, par conséquent, de répartir les efforts passant par la structure porteuse entre les deux moitiés du pneumatique.

Encore plus préférentiellement, les deux portions disjointes de l'interface radialement intérieure du sommet et symétriques sont structurellement identiques. Des portions structurellement identiques apportent une simplification de fabrication.

Toujours dans le cas de deux portions d'interface radialement intérieure du sommet disjointes, chaque portion disjointe de l'interface radialement intérieure du sommet a une largeur axiale W2 au moins égale à 0.05 fois la largeur axiale S du pneumatique. La largeur axiale W2 de la portion d'interface radialement intérieure du sommet est la distance axiale mesurée entre les points respectivement les plus axialement intérieur et extérieur de ladite portion. En deçà de cette valeur minimale, la largeur axiale W2 de la portion d'interface radialement intérieure du sommet est insuffisante pour pouvoir permettre l'accrochage radialement extérieur de la structure porteuse. Cette borne inférieure est identique à celle de la largeur axiale W1 de la semelle flexible, car, généralement, les largeurs axiales W1 et W2, correspondant aux accrochages respectivement radialement intérieur et extérieur de la structure porteuse sont sensiblement identiques.

Avantageusement chaque portion disjointe de l'interface radialement intérieure du sommet a une largeur axiale W2 au plus égale à 0.4 fois la largeur axiale S du pneumatique. Cette borne supérieure est identique à celle de la largeur axiale W1 de la semelle flexible, car, généralement, les largeurs axiales W1 et W2, correspondant aux accrochages respectivement radialement intérieur et extérieur de la structure porteuse, sont sensiblement identiques.

En ce qui concerne la structure porteuse, chaque élément porteur peut être caractérisé géométriquement, en particulier par sa section moyenne Sₘ, cette caractéristique n'étant pas nécessairement identique pour l'ensemble des éléments porteurs. La section moyenne Sₘ est la moyenne des sections obtenues par la coupe de l'élément porteur par toutes les surfaces cylindriques, coaxiales au pneumatique et radialement comprises dans la cavité torique intérieure. Dans le cas le plus fréquent d'une section constante, la section moyenne Sₘ est la section constante de l'élément porteur. La section moyenne Sₘ comprend une plus grande dimension caractéristique Dₘₐₓ et une plus petite dimension caractéristique Dₘᵢₙ, dont le rapport R= Dₘₐₓ/Dₘᵢₙ est appelé rapport de forme. A titre d'exemples, un élément porteur ayant une section moyenne Sₘ circulaire, ayant un diamètre égal à d, a un rapport de forme R=1, un élément porteur ayant une section moyenne Sₘ rectangulaire, ayant une longueur L et une largeur l, a un rapport de forme R=L/l, et un élément porteur ayant une section moyenne Sₘ elliptique, ayant un grand axe D et un petit axe d, a un rapport de forme R=D/d.

Un premier type d'élément porteur préféré, avec un rapport de forme R au plus égal à 3, est dit unidimensionnel. En d'autres termes, un élément porteur est considéré comme unidimensionnel, quand la plus grande dimension caractéristique Dₘₐₓ de sa section moyenne Sₘ est au plus égale à 3 fois la plus petite dimension caractéristique Dₘᵢₙ de sa section moyenne Sₘ. Un élément porteur unidimensionnel a un comportement mécanique de type filaire, c'est-à-dire qu'il ne peut être soumis qu'à des efforts d'extension ou de compression selon sa ligne moyenne. C'est la raison pour laquelle un élément porteur unidimensionnel est usuellement appelé élément porteur filaire. Parmi les composants couramment utilisés dans le domaine du pneumatique, les renforts textiles, constitués par un assemblage de filés textiles, ou les câbles métalliques, constitués par un assemblage de fils métalliques, peuvent être considérés comme des éléments porteurs unidimensionnels, car leur section moyenne Sₘ étant sensiblement circulaire, le rapport de forme R est égal à 1, donc inférieur à 3.

Un deuxième type d'élément porteur, avec un rapport de forme R au moins égal à 3, est dit bidimensionnel. En d'autres termes, un élément porteur est considéré comme bidimensionnel, quand la plus grande dimension caractéristique Dₘₐₓ de sa section moyenne Sₘ est au moins égale à 3 fois la plus petite dimension caractéristique Dₘᵢₙ de sa section moyenne Sₘ. Un élément porteur bidimensionnel a un comportement mécanique de type membranaire, c'est-à-dire qu'il ne peut être soumis qu'à des efforts d'extension ou de compression dans son épaisseur définie par la plus petite dimension caractéristique Dₘᵢₙ de sa section moyenne Sₘ. Selon une première variante, un élément porteur, avec un rapport de forme R au moins égal à 3 et au plus égal à 50, est dit bidimensionnel de type lanière. Selon une deuxième variante, un élément porteur, avec un rapport de forme R au moins égal à 50, est dit bidimensionnel de type film.

En ce qui concerne la nature du ou des matériaux constitutifs de l'élément porteur, tout élément porteur comprend avantageusement un matériau de type polymère ou métal ou verre ou carbone. Les polymères, en particulier les élastomères, et le métal, tel que l'acier, sont couramment utilisés dans le domaine du pneumatique. Le verre et le carbone sont des matériaux alternatifs envisageables pour une utilisation en pneumatique. Dans une première variante de matériau, tout élément porteur comprend avantageusement du polyéthylène téréphtalate (PET). Le PET est couramment utilisé dans le domaine du pneumatique, en raison d'un bon compromis entre ses propriétés mécaniques, telles que sa résistance à la rupture en traction, et son coût. Dans une seconde variante de matériau, tout élément porteur comprend également avantageusement un polyamide aliphatique, tel que du nylon. Le nylon est également couramment utilisé dans le domaine du pneumatique pour les mêmes raisons que le PET.

Selon une première variante de structure de l'élément porteur, tout élément porteur a une structure homogène, comprenant un seul constituant. C'est la structure la plus simple envisagée, telle que, par exemple, un fil ou une membrane. Selon une deuxième variante de structure, tout élément porteur a une structure composite, comprenant au moins deux constituants. C'est une structure constituée par un assemblage d'au moins deux éléments, telle que, à titre d'exemple, un câble constitué par un ensemble de fils élémentaires ou une membrane constituée par des fils tramés.

Concernant les matériaux composant l'élément porteur, dans une première variante de composition, tout élément porteur comprend un seul matériau: à titre d'exemple, un fil ou un câble en matériau textile. Dans une deuxième variante de composition, tout élément porteur comprend au moins deux matériaux. Dans ce cas, on a une structure composite du point de vue des matériaux: par exemple, un câble hybride comprenant des fils ayant des matériaux différents, tels que l'aramide et le nylon, ou un tissu comprenant des renforts textiles enrobés dans un matériau élastomérique et disposés parallèlement les uns aux autres ou sous forme de trame.

Selon un mode de réalisation préféré de la structure porteuse, la structure porteuse comprend des éléments porteurs filaires identiques. Ces éléments porteurs filaires sont usuellement appelés haubans. L'intérêt d'utiliser des éléments porteurs filaires est d'avoir une structure porteuse ayant une faible masse et peu hystérétique. L'utilisation d'éléments porteurs filaires identiques permet d'avoir une répartition homogène des efforts entre les éléments porteurs.

Il est avantageux que les éléments porteurs filaires forment, avec une direction radiale, un angle au plus égal à 50°. Plus l'angle est élevé, plus la rigidité transversale, selon la direction axiale, du pneumatique augmente, ce qui est favorable au comportement du pneumatique sous sollicitations transversales ou sollicitations de dérive. Toutefois, au-delà de 50°, en raison d'un effort latéral important exercé sur bourrelet du pneumatique, le bourrelet risque de passer pardessus la jante et entrainer le déjantage du pneumatique.

Concernant le ou les matériaux constitutifs des éléments porteurs filaires, les éléments porteurs filaires comprennent un matériau polymérique, tel qu'un polyamide aliphatique, un polyamide aromatique ou un polyester, ou un matériau métallique, tel que l'acier, ou un matériau de type verre ou carbone ou toute combinaison des précédents matériaux.

Selon un mode de réalisation préféré de la structure porteuse, la structure porteuse est constituée par des éléments porteurs filaires identiques dont les extrémités radialement extérieures sont liées à un tissu radialement extérieur, constituant l'interface radialement intérieure du sommet, et dont les extrémités radialement intérieures sont liées à un tissu radialement intérieur, solidarisé à la semelle flexible.

Ainsi deux tissus respectivement radialement extérieur et radialement intérieur servent d'interfaces respectivement entre le sommet du pneumatique et la semelle flexible. Par tissu, on entend une structure obtenue par tissage de fils élémentaires pouvant être constitués par divers types de matériaux. Cette conception permet avantageusement d'avoir une structure sandwich pouvant être fabriquée de façon indépendante et intégrée d'un seul bloc lors de la fabrication du pneumatique selon l'invention. La structure sandwich ainsi obtenue peut être solidarisée au sommet du pneumatique et à la semelle flexible par vulcanisation, collage ou tout autre procédé de liaison des tissus respectivement radialement extérieur et radialement intérieur.

L'invention est illustrée par les figures 1 à 3, non représentées à l'échelle et décrites ci-après :
- Figure 1: Coupe méridienne d'un pneumatique selon un premier mode de réalisation, avec deux semelles flexibles symétriques comprenant chacune une portion d'ancrage rigide.
- Figure 2 : Coupe méridienne d'un pneumatique selon un deuxième mode de réalisation, avec deux semelles flexibles symétriques comprenant chacune une portion d'ancrage souple.
- Figure 3 : Coupe circonférentielle d'un pneumatique selon l'invention, dans l'état écrasé.

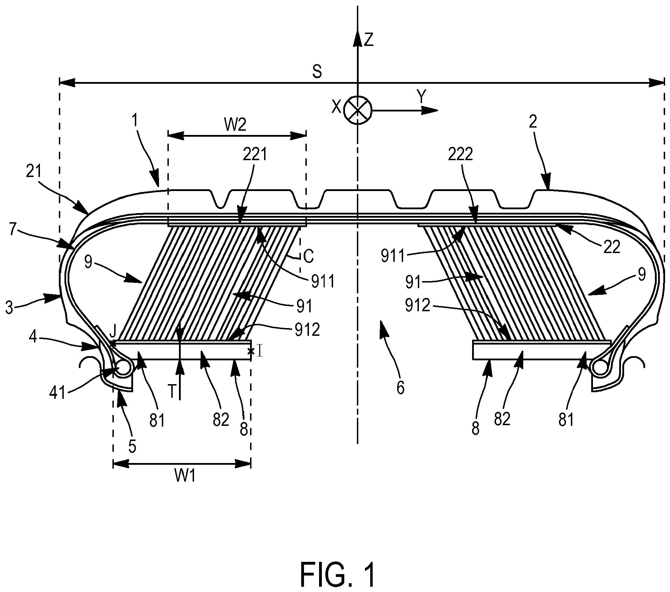

La figure 1 représente la coupe méridienne d'un pneumatique 1 selon un premier mode de réalisation, avec deux semelles flexibles 8 symétriques comprenant chacune une portion d'ancrage 81 rigide. Le pneumatique 1 comprend un sommet 2 ayant deux extrémités axiales 21 prolongées chacune, radialement vers l'intérieur, par un flanc 3 puis par un bourrelet 4 destiné à entrer en contact avec une jante 5, l'ensemble délimitant une cavité torique intérieure 6. Il comprend en outre une armature de carcasse 7, reliant les deux flancs 3 entre eux en s'étendant dans une portion radialement intérieure du sommet 2 et ancrée, dans chaque bourrelet 4, à un élément circonférentiel de renforcement 41. Chaque bourrelet 4 est prolongé axialement vers l'intérieur par une semelle flexible 8 en porte à faux comprenant une extrémité libre I. Les semelles flexibles 8 prolongeant chaque bourrelet 4 sont symétriques, par rapport à un plan équatorial XZ équidistant des extrémités axiales 21 du sommet 2, et structurellement identiques. Chaque semelle flexible 8 comprend une portion d'ancrage 81 au bourrelet et une portion courante 82 rigide, s'étendant axialement vers l'intérieur à partir de la portion d'ancrage 81 jusqu'à l'extrémité libre I. Dans ce premier mode de réalisation, la portion d'ancrage 81 au bourrelet prolonge structurellement la portion courante 82 rigide et est elle-même rigide. Chaque semelle flexible 8 a une largeur axiale W1, mesurée entre le point J, le plus axialement extérieur de la semelle flexible 8 et en contact avec le bourrelet 4, et l'extrémité libre axialement intérieure I de la semelle flexible 8. La portion courante 82 de la semelle flexible 8 a une épaisseur radiale moyenne T. Le pneumatique 1 comprend en outre une structure porteuse 9, destinée à reprendre au moins en partie la charge nominale Z appliquée au pneumatique monté sur sa jante 5 et gonflé à sa pression nominale P, constituée par des éléments porteurs 91, deux à deux indépendants, s'étendant continûment dans la cavité torique intérieure 6, à partir d'une interface radialement intérieure du sommet jusqu'à la semelle flexible 8, de telle sorte que, lorsque le pneumatique est soumis à une charge radiale nominale Z, les éléments porteurs 91, reliés à une portion de pneumatique en contact avec le sol, sont soumis à un flambage en compression et au moins une partie des éléments porteurs 91, reliés à la portion de pneumatique non en contact avec le sol, sont en tension. Dans le mode de réalisation représenté, l'interface radialement intérieure du sommet 22 à laquelle est reliée la structure porteuse 9 comprend deux portions disjointes (221, 222), symétriques par rapport au plan équatorial XZ et structurellement identiques. Chaque portion disjointe (221, 222) de l'interface radialement intérieure du sommet 22 a une largeur axiale W2. En ce qui concerne la structure porteuse 9, elle comprend des éléments porteurs filaires 91 identiques formant, avec une direction radiale ZZ', un angle C au plus égal à 50°. Dans le cas présenté, les extrémités radialement extérieures 911 des éléments porteurs filaires 91 sont liées à un tissu radialement extérieur, constituant l'interface radialement intérieure du sommet 22, et les extrémités radialement intérieures 912 des éléments porteurs filaires 91 sont liées à un tissu radialement intérieur, solidarisé à la semelle flexible 8.

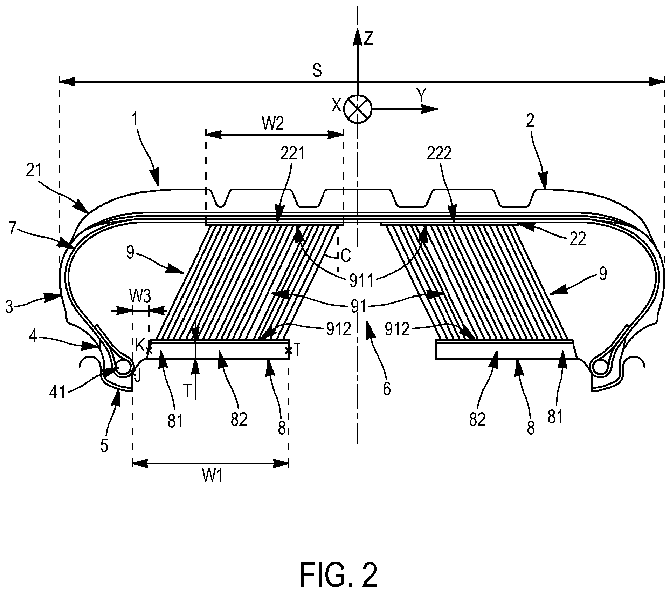

La figure 2 représente la coupe méridienne d'un pneumatique selon un deuxième mode de réalisation, avec deux semelles flexibles 8 symétriques comprenant chacune une portion d'ancrage 81 souple. La description de la figure 1 reste valable pour la figure 2. La spécificité du deuxième mode de réalisation représenté est la portion d'ancrage 81 prolongeant la portion courante 82 rigide de chaque semelle flexible 8. Dans le cas représenté, la portion d'ancrage 81, constituée par un prolongement d'armature de carcasse 7, a une rigidité K2 inférieure à la rigidité K1 de portion courante 82 rigide. La portion d'ancrage 81 de la semelle flexible 8 a une largeur axiale W3, mesurée entre le point J, le plus axialement extérieur de la semelle flexible 8 et en contact avec le bourrelet 4, et l'extrémité axialement extérieure K de la portion courante 82 de la semelle flexible 8.

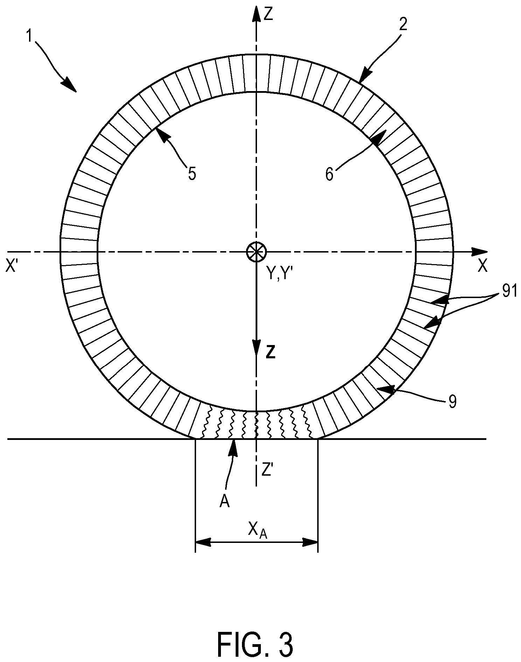

La figure 3 présente une coupe circonférentielle d'un pneumatique 1 selon l'invention, monté sur une jante 5, dans son état gonflé écrasé, c'est-à-dire soumis à une pression nominale P et une charge radiale nominale Z. La structure porteuse 9 est constituée par des éléments porteurs 91, deux à deux indépendants, s'étendant continûment dans la cavité torique intérieure 6, à partir d'une interface radialement intérieure (non représentée) du sommet 2 jusqu'à la semelle flexible (non représentée). Le pneumatique 1, soumis à une charge radiale nominale Z, est en contact avec un sol plan par une surface de contact A, ayant une longueur circonférentielle X_{A}. Les éléments porteurs 91, reliés à une portion de pneumatique en contact avec le sol, sont soumis à un flambage en compression et au moins une partie des éléments porteurs 91, reliés à la portion de pneumatique non en contact avec le sol, sont en tension.

L'invention a été plus particulièrement étudiée pour un pneumatique de tourisme de dimension 255/35 ZR 19. Un pneumatique de référence R a ainsi été comparé à un pneumatique A selon le deuxième mode de réalisation de l'invention, présenté sur la figure 2, avec deux semelles flexibles symétriques comprenant chacune une portion d'ancrage souple. Chaque semelle flexible a une largeur axiale W1 égale à 80 mm pour une largeur axiale S de pneumatique égale à 225 mm, c'est-à-dire égale à 0.35 fois la largeur axiale S, et une épaisseur radiale moyenne T égale à 5 mm. La portion d'ancrage de chaque semelle flexible à une largeur axiale W3 égale à 20 mm, c'est-à-dire égale à 0.25 fois la largeur axiale W1. Chaque portion d'interface radialement intérieure du sommet à une largeur axiale W2 égale à 60 mm pour une largeur axiale S de pneumatique égale à 225 mm, c'est-à-dire égale à 0.27 fois la largeur axiale S. La structure porteuse est constituée par des éléments porteurs filaires ou haubans identiques en PET, avec une densité de 85000 fils/m².

Le tableau 1 ci-dessous résume les écarts de caractéristiques entre le pneumatique A selon l'invention et le pneumatique de référence R :

**Tableau 1**

| Caractéristiques | Ecarts de caractéristiques entre l'invention A et la référence R |
|---|---|
| Résistance au roulement | -20% |
| Rigidité radiale K_{ZZ} | +10% |
| Rigidité transversale K_{YY} | +70% |

Sur l'exemple étudié, une diminution importante de la résistance au roulement, de l'ordre de -20%, ainsi qu'une augmentation significative des rigidités respectivement radiale K_{ZZ} (+10%) et transversale K_{YY} (+70%), de l'ordre de +10%, et par conséquent une amélioration du comportement du pneumatique.

## Revendications

1. Pneumatique (1) pour véhicule de tourisme ayant une largeur axiale S, destiné à être gonflé à une pression nominale (P) et à être soumis à une charge nominale (Z), comprenant :
- un sommet (2) ayant deux extrémités axiales (21) prolongées chacune, radialement vers l'intérieur, par un flanc (3) puis par un bourrelet (4) destiné à entrer en contact avec une jante (5), l'ensemble constitué par le sommet (2), les deux flancs (3) et les deux bourrelets (4) délimitant une cavité torique intérieure (6),
- une armature de carcasse (7), reliant les deux flancs (3) entre eux en s'étendant dans une portion radialement intérieure du sommet (2) et étant ancrée, dans chaque bourrelet (4), à un élément circonférentiel de renforcement (41),
**caractérisé en ce qu'**au moins un bourrelet (4) est prolongé axialement vers l'intérieur par une semelle flexible (8) en porte à faux comprenant une extrémité libre (I), **en ce que** la semelle flexible (8) comprend une portion d'ancrage (81) au bourrelet (4) et une portion courante (82) rigide, s'étendant axialement vers l'intérieur à partir de la portion d'ancrage (81) jusqu'à l'extrémité libre (I), **en ce que** le pneumatique (1) comprend une structure porteuse (9), destinée à reprendre au moins en partie la charge nominale (Z) appliquée au pneumatique (1) monté sur sa jante (5) et gonflé à sa pression nominale (P), **et en ce que** la structure porteuse (9) est constituée par des éléments porteurs (91), deux à deux indépendants, s'étendant continûment dans la cavité torique intérieure (6), à partir d'une interface radialement intérieure du sommet (22) jusqu'à la semelle flexible (8), de telle sorte que, lorsque le pneumatique (1) est soumis à une charge nominale (Z), les éléments porteurs (91), reliés à une portion de pneumatique (1) en contact avec le sol, sont soumis à un flambage en compression et au moins une partie des éléments porteurs (91), reliés à la portion de pneumatique (1) non en contact avec le sol, sont en tension.

2. Pneumatique (1) selon la revendication 1, **dans lequel** chaque bourrelet (4) est prolongé axialement vers l'intérieur par une semelle flexible (8).

3. Pneumatique (1) selon la revendication 2, **dans lequel** les semelles flexibles (8) sont symétriques par rapport à un plan équatorial (XZ) équidistant des extrémités axiales (21) du sommet (2).

4. Pneumatique (1) selon la revendication 3, **dans lequel** les semelles flexibles (8) symétriques sont structurellement identiques.

5. Pneumatique (1) selon l'une quelconque des revendications 2 à 4, **dans lequel** chaque semelle flexible (8) a une largeur axiale W1 au moins égale à 0.05 fois la largeur axiale S du pneumatique (1).

6. Pneumatique (1) selon l'une quelconque des revendications 2 à 5, **dans lequel** chaque semelle flexible (8) a une largeur axiale W1 au plus égale à 0.4 fois la largeur axiale S du pneumatique (1).

7. Pneumatique (1) selon l'une quelconque des revendications 2 à 6 **dans lequel** la portion d'ancrage (81) de chaque semelle flexible (8) a une rigidité K1 au plus égale à la rigidité K2 de la portion courante (82) de la semelle flexible (8).

8. Pneumatique (1) selon la revendication 7, **dans lequel** la portion d'ancrage (81) de chaque semelle flexible (8) a une largeur axiale W3 au plus égale à 0.85 fois la largeur axiale W1 de la semelle flexible (8), la largeur axiale W3 étant la distance axiale mesurée entre le point (J) le plus axialement extérieur de chaque semelle flexible (8) et en contact avec chaque bourrelet (4), et l'extrémité axialement extérieure (K) de la portion courante (82) de chaque semelle flexible (8).

9. Pneumatique (1) selon l'une quelconque des revendications 1 à 8, **dans lequel** l'interface radialement intérieure du sommet (22) à laquelle est reliée la structure porteuse (9) comprend deux portions disjointes (221, 222).

10. Pneumatique (1) selon la revendication 9, **dans lequel** les deux portions disjointes (221, 222) de l'interface radialement intérieure du sommet (22) sont symétriques par rapport à un plan équatorial (XZ) équidistant des extrémités axiales (21) du sommet (2).

11. Pneumatique (1) selon la revendication 10, **dans lequel** les deux portions disjointes (221, 222) de l'interface radialement intérieure du sommet (22) et symétriques sont structurellement identiques.

12. Pneumatique (1) selon l'une quelconque des revendications 9 à 11, **dans lequel** chaque portion disjointe (221, 222) de l'interface radialement intérieure du sommet (22) a une largeur axiale W2 au moins égale à 0.05 fois la largeur axiale S du pneumatique (1).

13. Pneumatique (1) selon l'une quelconque des revendications 9 à 12, **dans lequel** chaque portion disjointe (221, 222) de l'interface radialement intérieure du sommet (22) a une largeur axiale W2 au plus égale à 0.4 fois la largeur axiale S du pneumatique (1).

14. Pneumatique (1) selon l'une quelconque des revendications précédentes, **dans lequel** la structure porteuse (9) comprend des éléments porteurs filaires (91) identiques, les éléments porteurs filaires (91) formant, avec une direction radiale (ZZ'), un angle (C) au plus égal à 50°.

15. Pneumatique (1) selon la revendication précédente, **dans lequel** la structure porteuse (9) est constituée par des éléments porteurs filaires (91) identiques dont les extrémités radialement extérieures (911) sont liées à un tissu radialement extérieur, constituant l'interface radialement intérieure du sommet (22), et dont les extrémités radialement intérieures (912) sont liées à un tissu radialement intérieur, solidarisé à la semelle flexible (8).

## Patentansprüche

1. Reifen (1) für einen Personenkraftwagen mit einer axialen Breite S, der dazu bestimmt ist, auf einen Nenndruck (P) aufgepumpt und einer Nennlast (Z) ausgesetzt zu werden, beinhaltend:
- einen Scheitel (2), der zwei axiale Enden (21) aufweist, die jeweils durch eine Flanke (3) und dann durch einen Wulst (4), der dazu bestimmt ist, mit einer Felge (5) in Kontakt zu kommen, radial nach innen verlängert werden, wobei die Einheit, die aus dem Scheitel (2), den zwei Flanken (3) und den zwei Wulsten (4) besteht, einen torischen Innenhohlraum (6) abgrenzt,
- eine Karkassenbewehrung (7), die die zwei Flanken (3) miteinander verbindet, indem sie sich in einem radial innen liegenden Abschnitt des Scheitels (2) erstreckt, und die in jedem Wulst (4) an einem verstärkenden Umlaufelement (41) verankert ist,
**dadurch gekennzeichnet, dass** mindestens ein Wulst (4) durch eine freitragende flexible Sohle (8), die ein freies Ende (I) beinhaltet, axial nach innen verlängert wird, **dass** die flexible Sohle (8) einen Abschnitt zur Verankerung (81) an dem Wulst (4) und einen steifen durchlaufenden Abschnitt (82), der sich von dem Verankerungsabschnitt (81) bis zu dem freien Ende (I) axial nach innen erstreckt, beinhaltet, **dass** der Reifen (1) eine Tragstruktur (9) beinhaltet, die dazu bestimmt ist, die Nennlast (Z), die auf den Reifen (1), der auf seiner Felge (5) montiert und auf seinen Nenndruck (P) aufgepumpt ist, ausgeübt wird, mindestens teilweise aufzunehmen, **und dass** die Tragstruktur (9) aus Tragelementen (91) besteht, die paarweise unabhängig sind und sich in dem torischen Innenhohlraum (6) von einer radial innen liegenden Schnittstelle des Scheitels (22) bis zu der flexiblen Sohle (8) kontinuierlich erstrecken, sodass, wenn der Reifen (1) einer Nennlast (Z) ausgesetzt wird, die Tragelemente (91), die mit einem Abschnitt des Reifens (1), der mit dem Boden in Kontakt ist, verbunden sind, einer Knickbeanspruchung durch Druck ausgesetzt werden und mindestens ein Teil der Tragelemente (91), die mit dem Abschnitt des Reifens (1), der nicht mit dem Boden in Kontakt ist, verbunden sind, unter Spannung stehen.

2. Reifen (1) nach Anspruch 1, **wobei** jeder Wulst (4) durch eine flexible Sohle (8) axial nach innen verlängert wird.

3. Reifen (1) nach Anspruch 2, **wobei** die flexiblen Sohlen (8) in Bezug auf eine Äquatorialebene (XZ), die von den axialen Enden (21) des Scheitels (2) gleich weit entfernt ist, symmetrisch sind.

4. Reifen (1) nach Anspruch 3, **wobei** die symmetrischen flexiblen Sohlen (8) strukturell identisch sind.

5. Reifen (1) nach einem der Ansprüche 2 bis 4, **wobei** jede flexible Sohle (8) eine axiale Breite W1 aufweist, die mindestens gleich dem 0,05-fachen der axialen Breite S des Reifens (1) ist.

6. Reifen (1) nach einem der Ansprüche 2 bis 5, **wobei** jede flexible Sohle (8) eine axiale Breite W1 aufweist, die höchstens gleich dem 0,4-fachen der axialen Breite S des Reifens (1) ist.

7. Reifen (1) nach einem der Ansprüche 2 bis 6, **wobei** der Verankerungsabschnitt (81) jeder flexiblen Sohle (8) eine Steifigkeit K1 aufweist, die höchstens gleich der Steifigkeit K2 des durchlaufenden Abschnitts (82) der flexiblen Sohle (8) ist.

8. Reifen (1) nach Anspruch 7, **wobei** der Verankerungsabschnitt (81) jeder flexiblen Sohle (8) eine axiale Breite W3 aufweist, die höchstens gleich dem 0,85-fachen der axialen Breite W1 der flexiblen Sohle (8) ist, wobei die axiale Breite W3 der axiale Abstand ist, der zwischen dem axial am weitesten außen liegenden Punkt (J) jeder flexiblen Sohle (8), der mit jedem Wulst (4) in Kontakt ist, und dem axial außen liegenden Ende (K) des durchlaufenden Abschnitts (82) jeder flexiblen Sohle (8) gemessen wird.

9. Reifen (1) nach einem der Ansprüche 1 bis 8, **wobei** die radial innen liegende Schnittstelle des Scheitels (22), mit der die Tragstruktur (9) verbunden ist, zwei getrennte Abschnitte (221, 222) beinhaltet.

10. Reifen (1) nach Anspruch 9, **wobei** die zwei getrennten Abschnitte (221, 222) der radial innen liegenden Schnittstelle des Scheitels (22) in Bezug auf eine Äquatorialebene (XZ), die von den axialen Enden (21) des Scheitels (2) gleich weit entfernt ist, symmetrisch sind.

11. Reifen (1) nach Anspruch 10, **wobei** die zwei getrennten und symmetrischen Abschnitte (221, 222) der radial innen liegenden Schnittstelle des Scheitels (22) strukturell identisch sind.

12. Reifen (1) nach einem der Ansprüche 9 bis 11, **wobei** jeder getrennte Abschnitt (221, 222) der radial innen liegenden Schnittstelle des Scheitels (22) eine axiale Breite W2 aufweist, die mindestens gleich dem 0,05-fachen der axialen Breite S des Reifens (1) ist.

13. Reifen (1) nach einem der Ansprüche 9 bis 12, **wobei** jeder getrennte Abschnitt (221, 222) der radial innen liegenden Schnittstelle des Scheitels (22) eine axiale Breite W2 aufweist, die höchstens gleich dem 0,4-fachen der axialen Breite S des Reifens (1) ist.

14. Reifen (1) nach einem der vorhergehenden Ansprüche, **wobei** die Tragstruktur (9) identische Tragelemente aus Draht (91) beinhaltet, wobei die Tragelemente aus Draht (91) mit einer radialen Richtung (ZZ') einen Winkel (C) von höchstens gleich 50° bilden.

15. Reifen (1) nach dem vorhergehenden Anspruch, **wobei** die Tragstruktur (9) aus identischen Tragelementen aus Draht (91) besteht, deren radial außen liegende Enden (911) mit einem radial außen liegenden Gewebe, das die radial innen liegende Schnittstelle des Scheitels (22) bildet, verbunden sind und deren radial innen liegende Enden (912) mit einem radial innen liegenden Gewebe, das an der flexiblen Sohle (8) befestigt ist, verbunden sind.

## Claims

1. Tyre (1) for a passenger vehicle, having an axial width S and intended to be inflated to a nominal pressure (P) and to be subjected to a nominal load (Z), comprising:
- a crown (2) having two axial ends (21) that are each extended, radially towards the inside, by a sidewall (3) and then by a bead (4) that is intended to come into contact with a rim (5), the assembly consisting of the crown (2), the two sidewalls (3) and the two beads (4) delimiting a toroidal interior cavity (6),
- a carcass reinforcement (7), connecting the two sidewalls (3) to one another by extending in a radially inner portion of the crown (2) and being anchored, in each bead (4), to a circumferential reinforcing element (41),
**characterized in that** at least one bead (4) is extended axially towards the inside by an overhanging flexible base (8) comprising a free end (I), **in that** the flexible base (8) comprises an anchoring portion (81) for anchoring to the bead (4) and a rigid main portion (82), extending axially towards the inside from the anchoring portion (81) as far as the free end (I), **in that** the tyre (1) comprises a bearing structure (9), intended to at least partially absorb the nominal load (Z) applied to the tyre (1) that is mounted on the rim (5) and inflated to its nominal pressure (P), **and in that** the bearing structure (9) is made up of bearing elements (91), which are independent in pairs, extending continuously in the toroidal interior cavity (6), from a radially inner interface of the crown (22) as far as the flexible base (8), such that, when the tyre (1) is subjected to a nominal load (Z), the bearing elements (91) that are connected to a portion of the tyre (1) that is in contact with the ground are made to buckle under compression and at least some of the bearing elements (91) that are connected to a portion of the tyre (1) that is not in contact with the ground are under tension.

2. Tyre (1) according to Claim 1, **wherein** each bead (4) is extended axially towards the inside by a flexible base (8) .

3. Tyre (1) according to Claim 2, **wherein** the flexible bases (8) are symmetric with respect to an equatorial plane (XZ) that is equidistant from the axial ends (21) of the crown (2).

4. Tyre (1) according to Claim 3, **wherein** the symmetric flexible bases (8) are structurally identical.

5. Tyre (1) according to any one of Claims 2 to 4, **wherein** each flexible base (8) has an axial width W1 at least equal to 0.05 times the axial width S of the tyre (1) .

6. Tyre (1) according to any one of Claims 2 to 5, **wherein** each flexible base (8) has an axial width W1 at most equal to 0.4 times the axial width S of the tyre (1) .

7. Tyre (1) according to any one of Claims 2 to 6, **wherein** the anchoring portion (81) of each flexible base (8) has a stiffness K1 at most equal to the stiffness K2 of the main portion (82) of the flexible base (8).

8. Tyre (1) according to Claim 7, **wherein** the anchoring portion (81) of each flexible base (8) has an axial width W3 at most equal to 0.85 times the axial width W1 of the flexible base (8), the axial width W3 being the axial distance that is measured between the axially outermost point (J) of each flexible base (8), which is in contact with each bead (4), and the axially outer end (K) of the main portion (82) of each flexible base (8).

9. Tyre (1) according to any one of Claims 1 to 8, **wherein** the radially inner interface of the crown (22), to which interface the bearing structure (9) is connected, comprises two separate portions (221, 222).

10. Tyre (1) according to Claim 9, **wherein** the two separate portions (221, 222) of the radially inner interface of the crown (22) are symmetric with respect to an equatorial plane (XZ) that is equidistant from the axial ends (21) of the crown (2).

11. Tyre (1) according to Claim 10, **wherein** the two separate and symmetric portions (221, 222) of the radially inner interface of the crown (22) are structurally identical.

12. Tyre (1) according to any one of Claims 9 to 11, **wherein** each separate portion (221, 222) of the radially inner interface of the crown (22) has an axial width W2 at least equal to 0.05 times the axial width S of the tyre (1).

13. Tyre (1) according to any one of Claims 9 to 12, **wherein** each separate portion (221, 222) of the radially inner interface of the crown (22) has an axial width W2 at most equal to 0.4 times the axial width S of the tyre (1) .

14. Tyre (1) according to any one of the preceding claims, **wherein** the bearing structure (9) comprises identical filamentary bearing elements (91), the filamentary bearing elements (91) forming an angle (C) at most equal to 50° with a radial direction (ZZ').

15. Tyre (1) according to the preceding claim, **wherein** the bearing structure (9) is made up of identical filamentary bearing elements (91) of which the radially outer ends (911) are connected to a radially outer fabric, which constitutes the radially inner interface of the crown (22), and of which the radially inner ends (912) are connected to a radially inner fabric, which is secured to the flexible base (8).
